# EUROPEAN PATENT APPLICATION

(11) **EP 4 488 808 A1**
(43) Date of publication of application: **08.01.2025**
(21) Application number: 23183310.4
(22) Date of filing: 04.07.2023
(51) Int. Cl.: G06F 3/041, G06F 3/044

(54) **A CAPACITANCE AND PIEZOELECTRIC SENSING DEVICE**

(71) Applicant: Aito BV, 1043 EJ Amsterdam (NL)
(72) Inventor: Riihiaho, Jukka, 01620 Vantaa (FI)
(74) Representative: Papula Oy

(57) **Abstract**

It is an object to provide a device for capacitive and piezoelectric touch sensing. According to an embodiment, a device (100), comprises a touch surface (101); a capacitive sensor array capacitively coupled to the touch surface (101); and a plurality of piezoelectric sensors (102) mechanically coupled to the touch surface (101). A detection unit (105) is configured to: receive a piezoelectric sensor signal from at least one emitting piezoelectric sensor of the plurality of piezoelectric sensors (102), scan at least part of the touch surface (101) using the capacitive sensor array and identify a touch location on the touch surface based on the scan and on the at least one emitting piezoelectric sensor (102) .

## Description

### TECHNICAL FIELD

The present disclosure relates to a capacitive and piezoelectric sensing device.

### BACKGROUND

An array of capacitive sensors associated with a touch surface can be used for detecting a touch on the touch surface. Some capacitive sensing methods perform a scan of the entire capacitive sensor array to determine a location of the touch on the touch surface. These capacitive sensing methods are accurate but require substantial power, scanning time, and signal processing capability.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a device for touch sensing. The foregoing and other objects are achieved by the features of the independent claims. Further implementation forms are apparent from the dependent claims, the description and the figures.

According to a first aspect, a device comprises a touch surface, a capacitive sensor array capacitively coupled to the touch surface, and a plurality of piezoelectric sensors mechanically coupled to the touch surface. A detection unit is configured to receive a piezoelectric sensor signal from at least one emitting piezoelectric sensor of the plurality of piezoelectric sensors, scan at least part of the touch surface using the capacitive sensor array and identify a touch location on the touch surface based on the scan and on the at least one emitting piezoelectric sensor.

A section of the touch surface where the touch location is located can be determined based on the emitting piezoelectric sensor. As such, it is not necessary to perform a full scan of the capacitive sensor array to determine the touch location. For example, it is sufficient to perform only a partial scan or a parallel scan of the capacitive sensor array. The partial or parallel scan be achieved with lower power consumption, shorted time and/or lower signal processing capability, compared to a full scan. The partial or parallel scan can be achieved with a better accuracy/ power consumption ratio, and/or a better accuracy/processing time ratio, compared to a full scan.

In some implementation forms of the first aspect, the touch surface is divided into a plurality of sections, and each section of the touch surface is associated with at least one of the piezoelectric sensors. The detection unit is further configured to: identify the section of the touch surface associated with the at least one emitting piezoelectric sensor, and selectively scan the section of the touch surface associated with the at least one piezoelectric sensor.

In some implementation forms of the first aspect, the capacitive sensor array comprises a plurality of capacitive sensors, wherein each section of the touch surface is associated with a different subset of the capacitive sensors, and wherein the detection unit is further configured to: selectively measure a capacitive coupling for each capacitive sensor of the subset of the capacitive sensors associated with the identified section of the touch surface.

In some implementation forms of the first aspect, the measured capacitive coupling is a self-capacitance.

In some implementation forms of the first aspect, the measured capacitive coupling is a mutual capacitance. The capacitive sensor array comprises: a plurality of transmitter electrodes; and a plurality of receiver electrodes, wherein each pair of transmitter electrode and receiver electrode forms one of the capacitive sensors, and wherein each section of the touch surface is associated with one of a plurality of subsets of the transmitter electrodes, and one of a plurality of subsets of the receiver electrodes.

In some implementation forms of the first aspect, the detection unit is configured to: select the subset of the transmitter electrodes associated with the identified section of the touch surface, and successively drive each transmitter electrode of the selected subset of the transmitter electrodes.

In some implementation forms of the first aspect, the detection unit is configured to: select the subset of the receiver electrodes associated with the identified section of the touch surface, and for each receiver electrode of the selected subset of the receiver electrodes, acquire a receiver signal using the receiver electrode.

In some implementation forms of the first aspect, each piezoelectric sensor is associated with a different section of the touch surface, and wherein the detection unit is further configured to: identify the section of the touch surface associated with the at least one emitting piezoelectric sensor, scan at least two of the sections of the touch surface in parallel, identify a candidate touch location in each of the at least two sections of the touch surface, and select the candidate touch location in the identified section of the touch surface.

In some implementation forms of the first aspect, each section of the touch surface is associated with a different subset of the capacitive sensors, and wherein the capacitive sensors are grouped into groups of capacitive sensors, wherein each group of capacitive sensors includes one capacitive sensor of each subset of the capacitive sensors, wherein the detection unit is configured to: for each group of capacitive sensors, measure a capacitive coupling of the group of capacitive sensors, identify, based on the measured capacitive couplings, at least one candidate capacitive sensor in each of the subsets of capacitive sensors, and select the candidate capacitive sensor in the subset of capacitive sensors associated with the at least one emitting piezoelectric sensor.

In some implementation forms of the first aspect, the measured capacitive coupling is a self-capacitance. For each group of capacitive sensors, all the capacitive sensors of the group are connected to a same drive/measure line.

In some implementation forms of the first aspect, the measured capacitive coupling is a mutual capacitance. The capacitive sensor array comprises: a plurality of transmitter electrodes; and a plurality of receiver electrodes, wherein each pair of transmitter electrode and receiver electrode forms one of the capacitive sensors, and wherein each section of the touch surface is associated with one of a plurality of subsets of the transmitter electrodes, and one of a plurality of subsets of the receiver electrodes.

In some implementation forms of the first aspect, the transmitter electrodes are grouped into groups of transmitter electrodes, wherein each group of transmitter electrodes includes one transmitter electrode of each subset of the transmitter electrodes, wherein the detection unit is configured to: successively drive each group of transmitter electrodes, all the transmitter electrodes of the group of transmitter electrodes being driven simultaneously.

In some implementation forms of the first aspect, the receiver electrodes are grouped into groups of receiver electrodes, wherein each group of receiver electrodes includes one receiver electrode of each subset of the receiver electrodes, wherein the detection unit is configured to: for each group of receiver electrodes, acquire a receiver signal using all the receiver electrodes of the group of receiver electrodes.

According to a second aspect, a method comprises: receiving a piezoelectric sensor signal from at least one emitting piezoelectric sensor of a plurality of piezoelectric sensors, scanning at least part of a touch surface using a capacitive sensor array, and identifying a touch location on the touch surface based on the scan and on the at least one emitting piezoelectric sensor.

In some implementation forms of the second aspect, each piezoelectric sensor is associated with a different section of the touch surface, and wherein scanning at least part of a touch surface using the capacitive sensor array comprises: identifying the section of the touch surface associated with the at least one emitting piezoelectric sensor, and selectively scanning the section of the touch surface associated with the at least one piezoelectric sensor.

In some implementation forms of the first aspect, each piezoelectric sensor is associated with a different section of the touch surface. Scanning at least part of a touch surface using a capacitive sensor array comprises scanning at least two of the sections of the touch surface in parallel. Identifying the touch location on the touch surface based on the scan and on the at least one emitting piezoelectric sensor comprises: identifying the section of the touch surface associated with the at least one emitting piezoelectric sensor, identifying a candidate touch location in each of the at least two sections of the touch surface, and selecting the candidate touch location in the identified section of the touch surface.

According to a third aspect, a computer program product comprising program code configured to perform the method according to any implementation form of the second aspect, when the computer program is executed on a computing device.

It is to be understood that the implementation forms of the aspects described above may be used in combination with each other. Several of the implementation forms may be combined together to form a further implementation form.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a cross-sectional representation of a device according to an embodiment.
Fig. 2 illustrates a schematic representation of a device according to an embodiment.
Fig. 3 illustrates a flow chart representation of a method according to an embodiment.
Fig. 3A illustrates a flow chart representation of a method according to an embodiment.
Fig. 4 illustrates a schematic representation of device according to an embodiment.
FIG. 5 illustrates an association between a piezoelectric sensor and a subset of transmitter electrodes and a subset of receiver electrodes, according to an embodiment.
FIG. 6 illustrates a flow chart representation of a method to perform a partial scan, according to an embodiment.

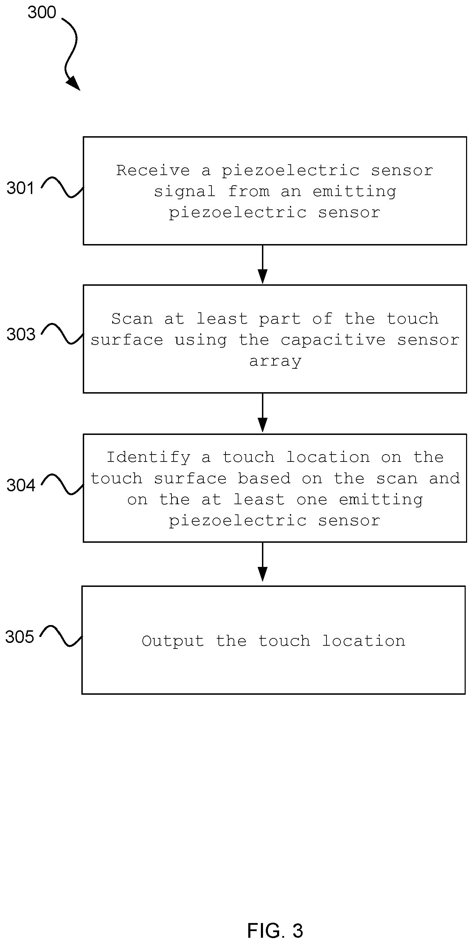

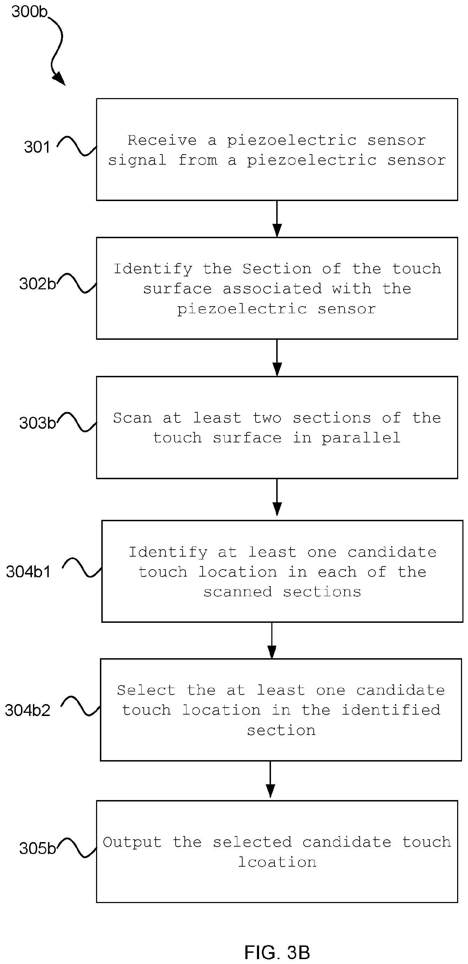

Fig. 3B illustrates a flow chart representation of a method according to an embodiment.

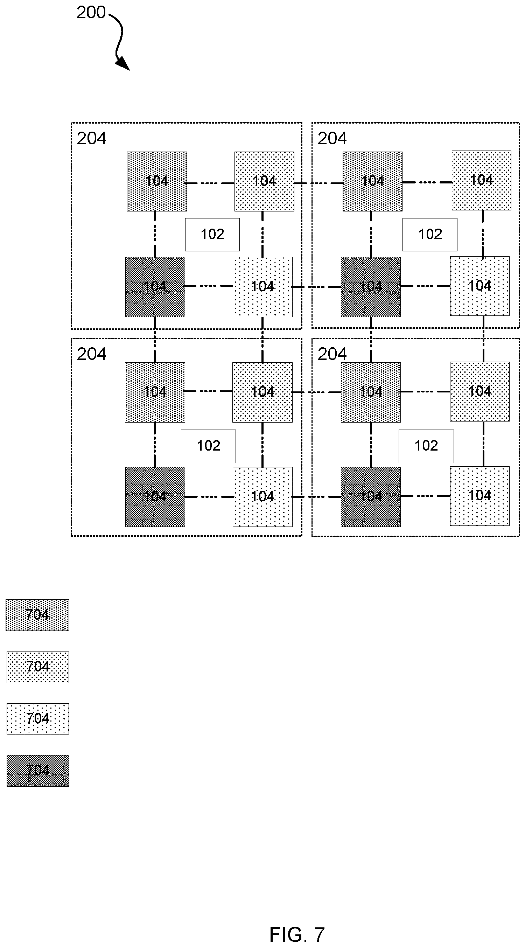

FIG. 7 illustrates groups of capacitive sensors, according to an embodiment.

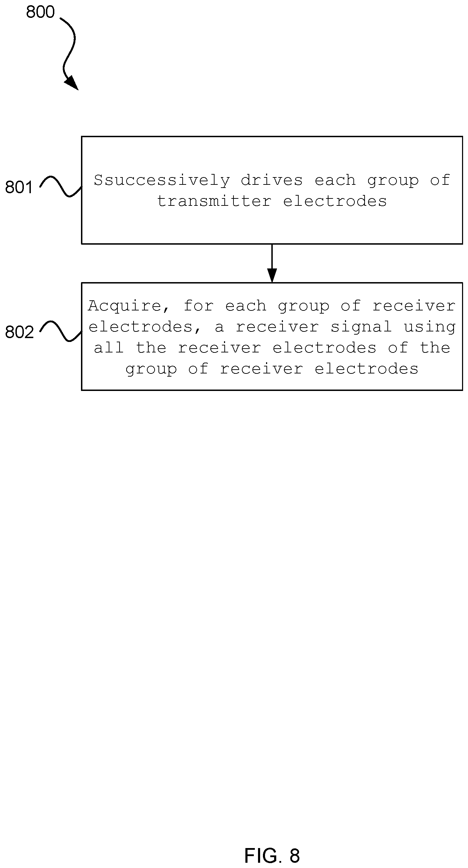

FIG. 8 illustrates a flow chart representation of a method to measure a capacitive coupling for one group of capacitive sensors, according to an embodiment.

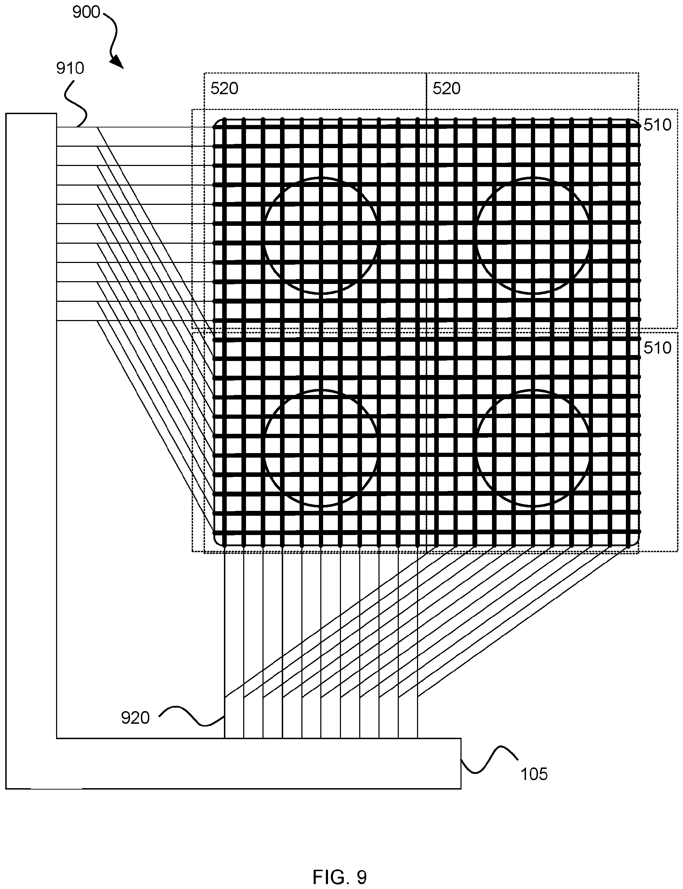

FIG. 9 illustrates a plurality of groups of transmitter electrodes and a plurality of groups of receiver electrodes, according to an embodiment.

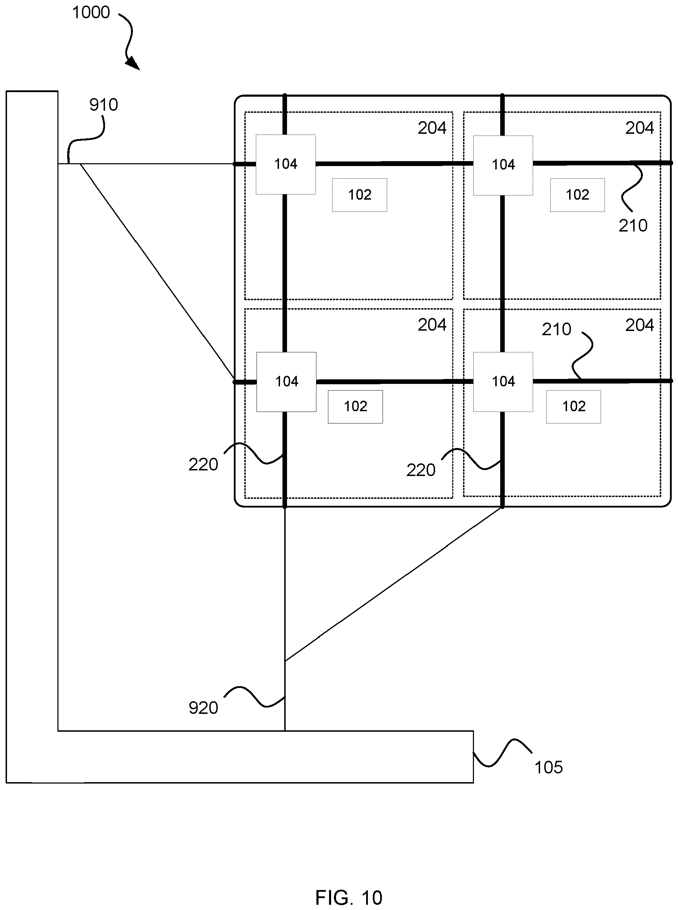

FIG. 10 illustrates one group of transmitter electrodes and one group of receiver electrodes, according to an embodiment.

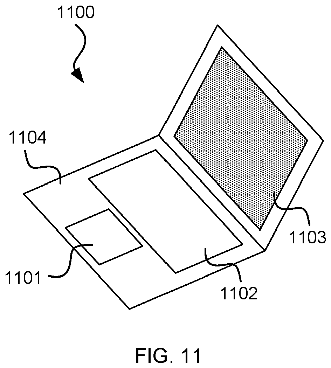

Fig. 11 illustrates a schematic representation of an electronic computing device according to an embodiment.

In the following, like reference numerals are used to designate like parts in the accompanying drawings.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

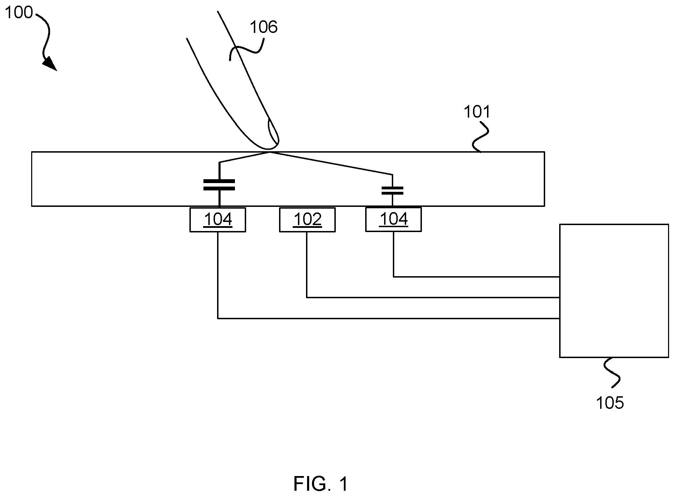

FIG. 1 illustrates a schematic representation of a cross section of a device 100 according to an embodiment.

According to an embodiment, the device 100 comprises a touch surface 101, a plurality of piezoelectric sensors 102, and a plurality of capacitive sensors 104. The plurality of capacitive sensors 104 form a capacitive sensor array.

The plurality of piezoelectric sensors 102 are mechanically coupled to the touch surface 101. Each piezoelectric sensor in the plurality of piezoelectric sensor 102 may be configured to convert a force applied to the piezoelectric sensor via the touch surface 101 into an electrical signal. A piezoelectric sensor may also be referred to as a piezoelectric element, a piezoelectric transducer, or similar.

The touch surface 101 may also be referred to as a layer, a surface layer, a touch interface surface, or a touch interface layer. The touch surface 101 may be part of a touch user interface. The touch surface 101 may be, for example, a part of a trackpad or a key/button of a laptop computer or a touch screen.

The touch surface 101 may comprise a first side and a second side. The first side may be at least partially unobstructed. A user may touch the first side with an object 106, such as a finger. The object 106 may be, for example, a finger of a user, any other body part of a human, a stylus pen, or some other object held by a user. In the case that the object 106 is a finger, the user may be wearing gloves, and only the fabric of the glove may be in direct contact with the touch surface 101.

The plurality of piezoelectric sensors 102 may be arranged onto the second side of the touch surface 101. The plurality of piezoelectric sensors 102 may be next to the second side, in a close proximity to the second side or situated at a distance from the second side.

Each piezoelectric sensor in the plurality of piezoelectric sensors 102 may be configured to convert a mechanical stress in the piezoelectric sensor induced by a force exerted onto the first side of the touch surface 101 by an object 106 into a voltage. The mechanical stress may also be referred to as stress. The voltage may be referred to as electrical voltage, a stress induced voltage, or similar. The voltage may be proportional to the mechanical stress.

Each piezoelectric sensor may comprise piezoelectric material. The piezoelectric material may convert the force/stress applied to the piezoelectric sensors to an electric charge accumulation in the material via the piezoelectric effect, which can be detected as a voltage over the piezoelectric material. This may also be referred to as piezoelectricity.

The voltage induced over a piezoelectric sensor in the plurality of piezoelectric sensors 102 may be proportional to the rate of change of the force/pressure applied by the object 106 to the touch surface 101.

Each piezoelectric sensor in the plurality of piezoelectric sensors 102 may also be configured to convert a voltage applied over the piezoelectric sensor into a mechanical stress via the piezoelectric effect. Thus, when a driving voltage is applied over a piezoelectric sensor, a haptic effect may be induced into the touch surface 101.

Herein, two elements being mechanically coupled may indicate that there is a mechanical connection between the two elements. The two elements may be, for example, in contact with each other or the mechanical connection may be implemented via other elements. For example, each piezoelectric sensor in the plurality of piezoelectric sensors 102 may be in contact with the touch surface 101 or there may be one or more other elements between the piezoelectric sensor and the touch surface 101. Thus, when a force is applied to the touch surface 101 by an object 106 touching the touch surface 101, the force may be transferred to the piezoelectric sensors 102.

The plurality of capacitive sensors 104 are capacitively coupled (or couplable) to the touch surface 101. Each capacitive sensor 104 may be configured to detect and measure a capacitive coupling in an associated sensing region of the touch surface 101. The capacitive coupling changes with the proximity of the object 106 and thus may be used as an indicator of the presence of the object 106. A capacitive sensor may also be referred to as a capacitance element, a capacitance transducer, or similar.

The capacitive sensors 104 may use self-capacitance sensing methods based on changes in the capacitive coupling between each capacitive sensor 104 and an object 106. The object 106 near the capacitive sensor 104 may loads the capacitive sensors 104 or increases the parasitic capacitance to ground, thus changing the measured capacitive coupling.

The capacitive sensors 104 may use mutual capacitance sensing methods based on changes in the capacitive coupling between transmitter electrodes and receiver electrodes. A capacitive sensor 104 may be formed at the intersection of a transmitter electrode and a receiver electrode. An object 106 near the capacitive sensor 104 may alter the mutual coupling between the transmitter electrode and the receiver electrode, thus changing the measured capacitive coupling.

The device 100 further comprise a detection unit 105 electrically coupled to the plurality of piezoelectric sensors 102, and the capacitive sensors 104.

The detection unit 105 may comprise any electrical/electronic circuit configured to implement the functionality disclosed herein. The detection unit 105 does no need to be implemented as a separate unit/module/device. Rather, the detection unit 105 may refer to any section of the device 100 that is configured to implement the functionality disclosed herein.

The detection unit 105 may be configured to locate a touch location on the touch surface. To that end, the detection unit 105 may combined data received from at least one of the piezoelectric sensors 102 and at least some of the capacitive sensors 104.

More specifically, a section of the touch surface wherein the touch location is located may be determined based on at least one of the piezoelectric sensors 102. A location of the touch location within that section of the touch surface may be determined based on the data acquired by scanning at least part of the touch surface using the capacitive sensors.

It is not necessary to perform a full scan of the capacitive sensor array to determine the touch location. For example, it is sufficient to perform only a partial scan or a parallel scan of the capacitive sensor array.

The partial or parallel scan can be achieved with lower power consumption, shorted scanning time, lower signal processing capability and/or higher resolution, compared to a full scan. In particular, a desired scanning speed can be reached with lower cost hardware, lower scanning speed causing less electrical interference, and/or with lower power consumption.

The capacitive sensors are active sensors that use power to operate. As such, scanning the capacitive sensor array is power consuming. On the other hand, the piezoelectric sensors are passive sensors that do not require power to operate. As such, the use of piezoelectric sensors can reduce the overall power consumption of the device.

The detection unit 105 may comprise at least one processor. The at least one processor may comprise, for example, one or more of various processing devices, such as a co-processor, a microprocessor, a circuitry, a digital signal processor (DSP), a processing circuitry with or without an accompanying DSP, or various other processing devices including integrated circuits such as, for example, an application specific integrated circuit (ASIC), a field programmable gate array (FPGA), a microprocessor unit (MCU), a hardware accelerator, a special-purpose computer chip, or the like.

The detection unit 105 may further comprise a memory. The memory may be configured to store, for example, computer programs and the like. The memory may comprise one or more volatile memory devices, one or more non-volatile memory devices, and/or a combination of one or more volatile memory devices and non-volatile memory devices. For example, the memory may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

When the detection unit 105 is configured to implement some functionality, some component and/or components of the detection unit 105, such as the at least one processor and/or the memory, may be configured to implement this functionality. Furthermore, when the at least one processor is configured to implement some functionality, this functionality may be implemented using program code comprised, for example, in the memory.

The detection unit 105 may further comprise, for example, a boost converter circuit, a microprocessor, and other components used to interact with the plurality of piezoelectric sensors 102. The detection unit 105 may be further configured to, for example, provide haptic feedback via the plurality of piezoelectric sensors 102. The boost converter may provide a high voltage that may be needed to drive the plurality of piezoelectric sensors 102 in the case of haptic feedback.

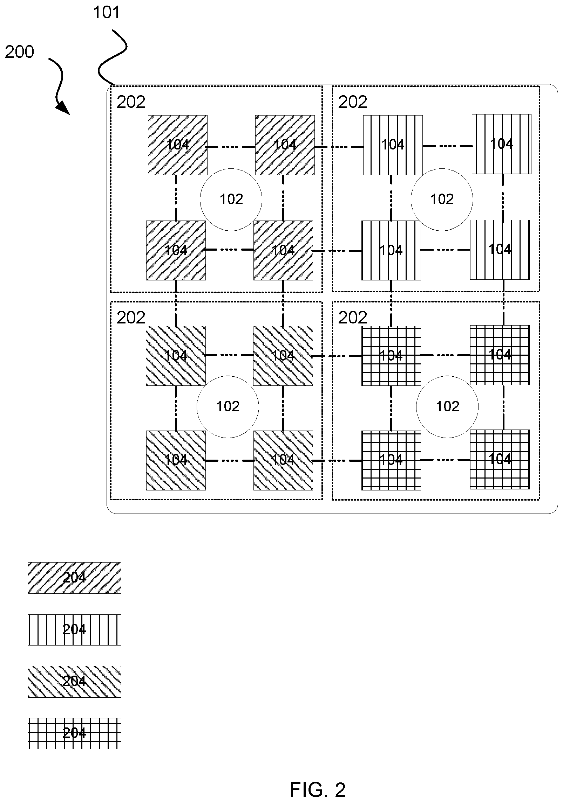

FIG. 2 illustrates a schematic representation of the device according to an embodiment.

As illustrated by FIG. 2, the capacitive sensors 104 form a capacitive sensor array 200. The capacitive sensor array 200 may be a capacitance sensing matrix. The capacitive sensors 104 may be arranged in a plurality of rows and columns. Each capacitive sensor 104 may correspond to a capacitive pixel of the capacitance sensing matrix.

The capacitive sensor array 200 may be scanned to measure the capacitive couplings of at least some of the capacitive sensors 104. Scanning the capacitive sensor array 200 may comprise measuring a capacitive coupling of at least some (or all) of the capacitive sensors 104 of the capacitive sensor array 200.

In self-capacitance sensing methods, scanning the capacitive sensor array 200 may comprise measuring the self-capacitance (e.g., capacitance to ground) of at least some (or all) of the capacitive sensors 104 of the capacitive sensor array 200 individually. At least (or all) of the capacitive sensors 104 may measure their respective self-capacitance continuously. An increase in self-capacitance of a capacitive sensor 104 (e.g., compared to some of the other capacitive sensor 104) may be indicative of the presence of the object close to the capacitive sensor 104.

In mutual capacitance sensing methods, scanning the capacitive sensor array 200 may comprise measuring the mutual coupling between at least some (or all) of the receiver electrodes and at least some (or all) of the transmitter electrodes. A change in mutual capacitance between a transmitter electrode 210 and a receiver electrode 220 may be indicative of the presence of the object at the intersection of the transmitter and receiver electrode.

Each of (at least some of) the piezoelectric sensors 102 is associated with a section 202 of the touch surface 101. The section 202 of the touch surface associated with a piezoelectric sensor may correspond to a sensing region of the piezoelectric sensor 102. The sensing region of the piezoelectric sensor 102 may be defined as the region of the touch surface around the piezoelectric sensor in which the piezoelectric sensor is able to detect an object. The sensing region of the piezoelectric sensors 102 may overlap. A section 202 of the touch surface may be associated with more than one piezoelectric sensor 102. At least one piezoelectric sensor 102 is associated with each section 202 of the touch surface.

Each of (at least some of) the piezoelectric sensors 102 is associated with a different subset 204 of the capacitive sensors 104. Each subset 204 of the capacitive sensors 104 defines a corresponding section 202 of the touch surface. The association may be determined based on a location of the capacitive sensors 104 in relation to the piezoelectric sensors 102. The capacitive sensors 104 in a sensing region of a piezoelectric sensor 102 may be associated with the piezoelectric sensors 102. The sensing region of the piezoelectric sensors 102 may overlap. As such, some capacitive sensors 104 may be associated with more than one piezoelectric sensor 102.

The detection unit 105 is configured with the association between the piezoelectric sensors 102 and the sections 202 of the touch surface and/or the subsets 204 of the capacitive sensors 104.

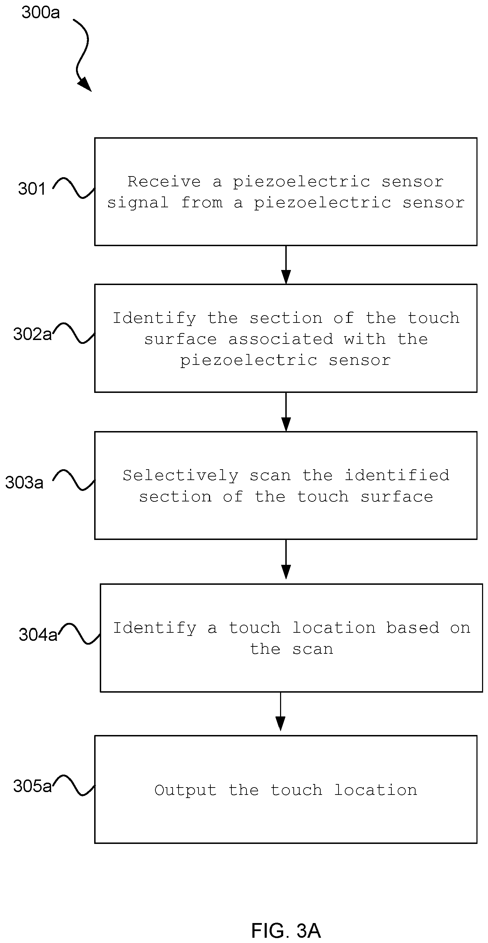

FIG. 3 illustrates a flow chart representation of a method 300 for detecting a touch location, according to an embodiment. The method 300 may be performed by, for example, the detection unit 105.

At operation 301, detection unit 105 receives a piezoelectric sensor signal from at least one piezoelectric sensor (hereafter called emitting piezoelectric sensor) of the plurality of piezoelectric sensors 102.

At operation 303, detection unit 105 scans at least part of the touch surface 101 using the capacitive sensor array 200. Scanning the touch surface 101 may comprise measuring a capacitive coupling of at least some of the capacitive sensors of the capacitive sensor array 200.

Operation 303 may be triggered by the reception of the piezoelectric sensor signal. As such, the scan of the touch surface 101 is only performed when an object is detected by the piezoelectric sensor. Scanning the touch surface using the capacitive sensor array 200 is power consuming. The power consumption of the device can be reduced by only performing the scan when an object is detected by the piezoelectric sensor.

At operation 304, detection unit 105 identifies a touch location (e.g., location of the object) by combining the data acquired by the capacitive sensor array 200 and the emitting piezoelectric sensor 102.

More specifically, a section of the touch surface wherein the touch location is located may be determined based on the emitting piezoelectric sensors 102. A location of the touch location within that section of the touch surface may be determined based on the data acquired by the capacitive sensor array 200.

Detection unit 105 may identify, based on the scan and the emitting piezoelectric sensor, at least one capacitive sensor that corresponds to the touch location.

At operation 305, detection unit 105 may output the touch location. More specifically, at operation 305, detection unit 105 may output the at least one identified capacitive sensor as the touch location.

As illustrated in FIG. 3A, in some embodiments 300a of method 300, detection unit 105 only performs a partial scan of the capacitive sensor array 200.

At operation 301, detection unit 105 receives a piezoelectric sensor signal from at least one piezoelectric sensor (hereafter called emitting piezoelectric sensor) of the plurality of piezoelectric sensors 102.

At operation 302a, detection unit 105 identifies the section of the touch surface associated with the emitting piezoelectric sensor.

The section of the touch surface where the touch location is located is determined based on the emitting piezoelectric sensor. As such, it is sufficient to perform only a partial scan of the capacitive array as opposed to performing a full scan of the capacitive array. The partial scan be achieved with lower power consumption, shorted time and/or lower signal processing capability, compared to a full scan.

At operation 302a, detection unit 105 may identify the subset of the capacitive sensors associated with the emitting piezoelectric sensor.

At operation 303a, detection unit 105 performs a partial scan of the capacitive sensor array 200. "partial" means that the scan does not involves all the capacitive sensors of the of the capacitive sensor array 200.In particular, detection unit 105 may selectively scan the section of the touch surface associated with the emitting piezoelectric sensor. Such a partial scan may involve only the section of the touch surface associated with the emitting piezoelectric sensor. The rest of the sections may not be scanned.

More specifically, detection unit 105 may selectively measure a capacitive coupling of each capacitive sensor of the subset of the capacitive sensors associated with the emitting piezoelectric sensor. "selectively" means that the detection unit 105 only measures a capacitive coupling for the subset of the capacitive sensors associated with the emitting piezoelectric sensor. The capacitive coupling for the other capacitive sensors may not be measured.

In self-capacitance sensing methods, the partial scan may comprise selectively measuring the self-capacitance (e.g., capacitance to ground) of each capacitive sensor of the subset of the capacitive sensors associated with the emitting piezoelectric sensor.

In mutual capacitance sensing methods, the partial scan may comprise selectively measuring the mutual capacitance between the transmitter and receiver electrodes associated with the subset of the capacitive sensors associated with the emitting piezoelectric sensor.

At operation 304a, detection unit 105 identifies the touch location based on the scan. More specifically, detection unit 105 may identify at least one capacitive sensor within the identified subset of the capacitive sensors.

At operation 305a, detection unit 105 may output the identified capacitive sensor as the touch location.

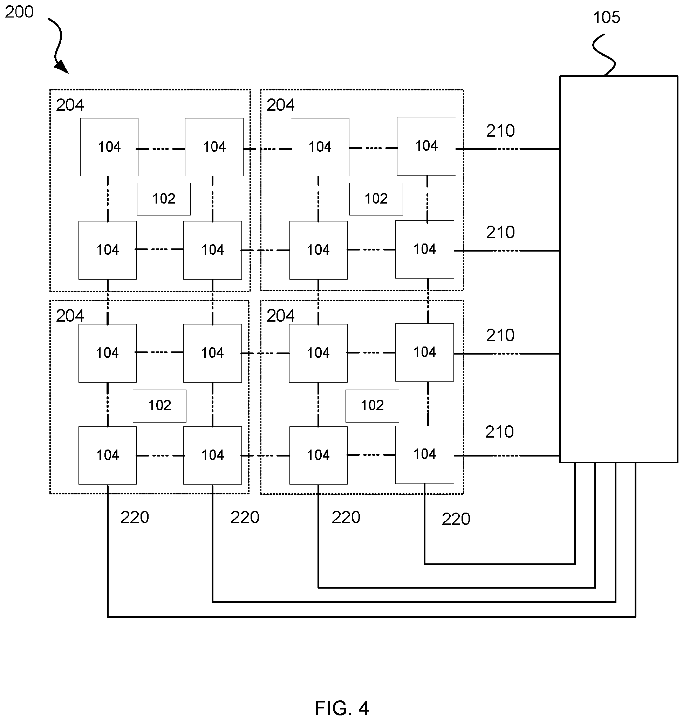

As illustrated by FIG. 4, the capacitance sensing matrix 200 may comprise a plurality of transmitter electrodes 210, and a plurality of receiver electrodes 220.

Each pair of transmitter electrode 210 and receiver electrode 220 forms one of the capacitive sensors 104. The transmitter electrodes 210 may be arranged in rows, and the receiver electrodes 220 in columns. One capacitive sensor 104 may be arranged at each intersection of the rows and columns.

The mutual coupling between a transmitter electrode 210 and a receiver electrode 220 may be measured to determine a capacitive coupling of the capacitive sensor at the intersection of the transmitter electrode 210 and the receiver electrode 220. A change in mutual capacitance between the transmitter electrode 210 and the receiver electrode 220 may be indicative of the presence of the object at the intersection of the transmitter and receiver electrode.

The transmitter electrodes 210 transmits a drive signal. The receiver sensor electrode 220 measures a resulting signal representative of the mutual coupling between the transmitter electrode 210 and the receiver electrode 220.

The capacitance sensing matrix 200 may be scanned to determine the capacitive couplings of (at least some of) the capacitive sensors 104. In particular, at least some of the transmitter electrodes 210 may be driven sequentially. During a drive phase of each transmitter electrodes 210, at least some of the receiver electrodes measure a resulting signal.

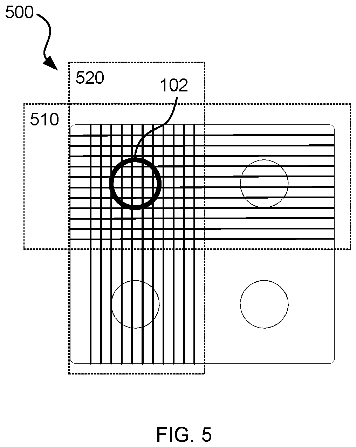

FIG. 5 illustrates an association between a piezoelectric sensor 102 and a subset 510 of the transmitter electrodes and a subset 520 of the receiver electrodes, according to an embodiment.

As illustrated by FIG. 5, each piezoelectric sensor 102 may be associated with a different subset 510 of the transmitter electrodes and/or with a different subset 520 of the receiver electrodes. In particular, each piezoelectric sensor may be associated with the transmitter electrodes (e.g., transmitter electrodes 210 in FIG. 4) and the receiver electrodes (e.g., receiver electrodes 220 in FIG. 4) that form the subset of capacitive sensors associated with the piezoelectric sensor.

FIG. 5 illustrates one piezoelectric sensor 102 and its associated subset 510 of the transmitter electrodes and associated subset 520 of the receiver electrodes, according to an embodiment. The other piezoelectric sensors are represented in dash lines. The other transmitter electrodes and receiver electrodes are not represented for clarity.

The detection unit (e.g., detection unit 105 of FIG. 4) may be configured with the association between the piezoelectric sensors 102 and the subsets 510 of the transmitter electrodes and/or the subsets 520 of the receiver electrodes 220.

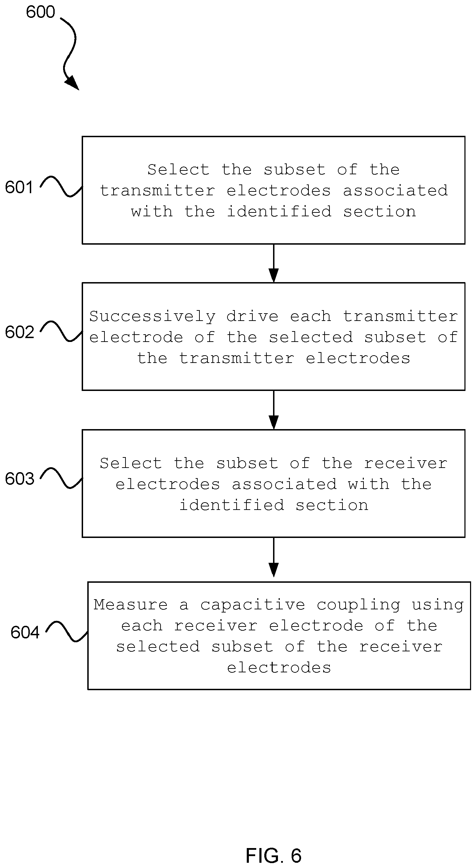

FIG. 6 illustrates a flow chart representation of a method 600 to perform a partial scan (e.g., operation 303a) according to an embodiment. The method 600 may be performed by, for example, the detection unit 105.

The method 600 may be performed to selectively scan the section of the touch surface associated with the emitting piezoelectric sensor. Such a scan may involve only the scan of the subset of the capacitive sensors associated with the emitting piezoelectric sensor. The rest of the capacitive sensors may not be scanned.

The scan may involve only the subset of transmitter electrodes 210 associated with the emitting piezoelectric sensor and/or only the subset of the subset of the receiver electrodes 220 associated with the emitting piezoelectric sensor. The rest of the transmitter electrodes and/or the rest of the receiver electrodes 220 may not be scanned.

At operation 601, detection unit 105 selects the subset of the transmitter electrodes 210 associated with the at least one piezoelectric sensor 102.

At operation 602, detection unit 105 successively drives each transmitter electrode of the selected subset of the transmitter electrodes 210. Each transmitter electrode 210 of the selected subset may be driven individually during a respective driving phase.

At operation 603, detection unit 105 selects the subset of the receiver electrodes 220 associated with the at least one piezoelectric sensor 102.

At operation 604, detection unit 105 acquires, during each driving phase, a resulting signal using each receiver electrode of the selected subset of the receiver electrodes 220.

The capacitive coupling of each capacitive sensor of the subset of capacitive sensors associated with the emitting piezoelectric sensor can be determined based on the resulting signals acquired at operation 604.

As illustrated in FIG. 3B, in some embodiments 300b of method 300, detection unit 105 performs a parallel scan.

The section of the touch surface where the touch location is located can be determined based on the emitting piezoelectric sensor. As such, it is sufficient to perform a parallel scan of the capacitive array as opposed to performing a full non-parallel scan of the capacitive array. "parallel" means that at least two sections of the capacitive sensor array 200 are scanned in parallel. A plurality of candidate touch locations can be determined based on the parallel scan. The touch location can be identified from among the candidate touch location based on the emitting piezoelectric sensor. The parallel scan be achieved with lower power consumption, shorter time and/or lower signal processing capability, compared to a full scan scanning each row and column individually.

At operation 301, detection unit 105 receives a piezoelectric sensor signal from at least one piezoelectric sensor (hereafter called emitting piezoelectric sensor) of the plurality of piezoelectric sensors 102.

At operation 302b, detection unit 105 identifies the section of the touch surface associated with the emitting piezoelectric sensor.

At operation 302b, detection unit 105 may identify the subset of the capacitive sensors associated with the emitting piezoelectric sensor.

At operation 303b, detection unit 105 scans at least two (or all) of the sections of the touch surface in parallel. The at least two sections of the touch surface include the section associated with the emitting piezoelectric sensor.

As illustrated by FIG. 7, (at least some of) the capacitive sensors 104 may be grouped into groups 704 of capacitive sensors. Each group 704 of capacitive sensors may include one capacitive sensor of each subset 204 of the capacitive sensors.

At operation 303b, detection unit 105 may measures a capacitive coupling for each group of capacitive sensors 104. Each measure is representative of the total capacitive coupling of all capacitive sensors 104 of the group.

In self-capacitance sensing methods, detection unit 105 may measure, for each group of capacitive sensors 104, the self-capacitance (e.g., capacitance to ground) of all the capacitive sensors 104 of the group together. To that end, all the capacitive sensors 104 of a group may be connected to a same drive/measure line, such that all the capacitive sensors 104 of the group are measured together. Each group of capacitive sensors 104 is connected to a different drive/measure line. Each drive/measure line may be configured to supply a drive signal to the all the capacitive sensors 104 of a group and acquire a resulting signal representative of the self-capacitance of all the capacitive sensors 104 of the group.

In mutual capacitance sensing methods, detection unit 105 may measure, for each group of capacitive sensors 104, the mutual capacitance between all the transmitter and all the receiver electrodes associated with the capacitive sensors 104 of the group.

At operation 304b1, detection unit 105 determines one candidate touch location in each of the scanned sections.

More specifically, at operation 304b1, detection unit 105 may identify, based on the capacitive couplings measured at operation 303b, at least one candidate capacitive sensor (corresponding to a candidate touch location) in each of the scanned subsets of capacitive sensors (corresponding to a scanned section).

If the capacitive coupling measured for one of the groups is indicative of the presence of the object, it means that the object is located near one of the capacitive sensors 104 of the group. All the capacitive sensors 104 of the group are therefore identified as candidate capacitive sensors.

At operation 304b2, detection unit 105 selects one of the candidate touch locations as the touch location based on the emitting piezoelectric sensor. The emitting piezoelectric sensor is used to select the candidate touch location that corresponds to the location of the object. The selected candidate touch location is the candidate touch location included in the section of the touch surface associate with the emitting piezoelectric sensor.

More specifically, at operation 304b2, detection unit 105 may select the at least one candidate capacitive sensor in the at least one subset of the capacitive sensors associated with the emitting piezoelectric sensor.

All the capacitive sensors 104 of a group may be connected in parallel.

In self-capacitance sensing methods, all the capacitive sensors 104 of a group may be connected to a same drive/measure line to measure the self-capacitance of all the capacitive sensors 104 of the group together.

In mutual capacitance sensing methods, as described in more details in relation to FIGs 8 and 9, the transmitter electrodes 210 included in a same group may be connected in parallel to a same drive line, and/or the receiver electrodes 220 included in a same group may be connected in parallel to a same measure line.

As such, each section of the touch surface can be made denser in capacitive sensors 104 with the same or lower number of drive/measure lines to detection unit 105. As such, a higher resolution may be achieved, and/or a number of drive/measure lines can be reduced, and/or the scanning time can be reduced.

FIG. 8 illustrates a flow chart representation of a method 800 to measure a capacitive coupling for one group of capacitive sensors (e.g., during operation 303b) according to an embodiment. The method 800 may be performed by, for example, the detection unit 105.

As illustrated by FIG. 9, the transmitter electrodes 210 may be grouped into groups of transmitter electrodes. Each group of transmitter electrodes may include one transmitter electrode of each subset 510 of the transmitter electrodes.

As illustrated by FIG. 9, the receiver electrodes 220 may be grouped into groups of receiver electrodes. Each group of receiver electrodes may include one receiver electrode 220 of each subset 520 of the receiver electrodes.

The detection unit is configured with the groups of transmitter electrodes and/or the groups of receiver electrodes.

FIG. 9 only illustrates an example of grouping of the transmitter electrodes and receiver electrodes. There are no limitations as to how the transmitter/receiver electrodes can be grouped as long as one group does not include more than on transmitter/receiver electrode of each subset of transmitter/receiver electrodes. Any transmitter/receiver electrode of a given subset of transmitter/receiver electrodes can be grouped with any transmitter/receiver electrode of another given subset of transmitter/receiver electrodes.

At operation 801, detection unit 105 successively drives each group of transmitter electrodes. All the transmitter electrodes of the group of transmitter electrodes may be driven simultaneously with the same drive signal.

At operation 802, detection unit 105 acquires, for each group of receiver electrodes, a resulting signal using all the receiver electrodes of the group of receiver electrodes. The resulting signal is indicative of a mutual capacitive coupling between all the transmitter electrodes of the group of transmitter electrodes and all the receiver electrodes of the group of receiver electrodes.

FIG. 10 illustrates one group of transmitter electrodes and one group of receiver electrodes, according to an embodiment. For clarity, the other groups of transmitter electrodes and the other groups of receiver electrodes are not illustrated.

The transmitter electrodes 210 included in a same group may be connected in parallel to a same drive line 910. The drive signal is applied to all the transmitter electrodes 210 of the group via the drive line 910.

The receiver electrodes 220 included in a same group may be connected in parallel to a same measure line 920. A resulting signal is acquired from all the receiver electrodes of the group via the measure line 920.

As such, the resulting signal is representative of the mutual capacitive coupling between all the receiver electrodes 220 of the group and all the transmitter electrodes 210 of the group.

If the resulting signal indicates the proximity of an object, it means that the object is located at the intersection of one of the receiver electrodes 220 of the group and one of the transmitter electrodes 210 of the group. The capacitive sensors 104 corresponding to the intersection of one of the receiver electrodes the group and one of the transmitter electrodes of the group are considered as candidate touch locations.

The touch location can be determined from among the candidate touch locations based on the signal received form the emitting piezoelectric sensor 102. More specifically, the candidate touch location included in the section associated with the emitting piezoelectric sensor is selected as touch location.

Each section of the touch surface can be made denser in transmitter electrodes and/or receiver electrodes with the same or lower number of drive lines 910 and/or measure lines 920 to detection unit 105. As such, a higher resolution may be achieved, and/or a number of lines can be reduced, and/or the scanning time can be reduced.

It should be appreciated that even though, in the embodiments disclosed herein, the plurality of piezoelectric sensors 102 and/or the plurality of capacitive sensors 104 may be illustrated only for a limited number of piezoelectric sensors and/or of capacitive sensors 104. The plurality of piezoelectric sensors 102 and/or the plurality of capacitive sensors 104 may comprise any number of piezoelectric sensors and/or capacitive sensors 104.

Although some embodiment disclosed herein may illustrate the plurality of piezoelectric sensors 102 in a matrix/array formation, these embodiments are only exemplary. The plurality of piezoelectric sensors 102 may be geometrically arranged in any pattern. For example, if the plurality of piezoelectric sensors 102 are used for a keyboard, each piezoelectric sensor may correspond to a key of the keyboard.

Fig. 11 illustrates a schematic representation of a laptop computer 1100 according to an embodiment.

The laptop computer 1100 may comprise a trackpad 1101. The trackpad 1101 may also be referred to as a touchpad or similar. The laptop computer 1100 may further comprise a keyboard 1102, a screen 1103, and a chassis 1104. The laptop computer 1100 may further comprise various other components not depicted in the embodiment of Fig. 11.

Although some embodiments may be disclosed herein using a laptop computer as an example, these embodiments apply in a similar fashion to any other electronic computing device, such as a smart phone, a tablet, or similar.

The laptop computer 1100 may comprise the device 100. For example, the touch surface 101 of the device 100 may correspond to the top surface of the trackpad 1101. Thus, a user may operate the laptop computer 1100 using the trackpad 1101.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A device (100), comprising:
a touch surface (101);
a capacitive sensor array (200) capacitively coupled to the touch surface (101);
a plurality of piezoelectric sensors (102) mechanically coupled to the touch surface (101); and
a detection unit (105) configured to:
receive a piezoelectric sensor signal from at least one emitting piezoelectric sensor of the plurality of piezoelectric sensors (102),
scan at least part of the touch surface (101) using the capacitive sensor array (200), and
identify a touch location on the touch surface based on the scan and on the at least one emitting piezoelectric sensor (102).

2. The device (100) according to claim 1, wherein the touch surface (101) is divided into a plurality of sections (204), and wherein each section (202) of the touch surface (101) is associated with at least one of the piezoelectric sensors (102), and wherein the detection unit (105) is further configured to:
identify the section (202) of the touch surface (101) associated with the at least one emitting piezoelectric sensor (102), and
selectively scan the section (202) of the touch surface associated with the at least one piezoelectric sensor (102).

3. The device (100) according to claim 2, wherein the capacitive sensor array (200) comprises a plurality of capacitive sensors (104), wherein each section (202) of the touch surface (101) is associated with a different subset (204) of the capacitive sensors (104), and wherein the detection unit (105) is further configured to:
selectively measure a capacitive coupling for each capacitive sensor (104) of the subset of the capacitive sensors associated with the identified section (202) of the touch surface.

4. The device (100) according to claim 3, wherein the measured capacitive coupling is a self-capacitance.

5. The device (100) according to claim 3, wherein the measured capacitive coupling is a mutual capacitance, wherein the capacitive sensor array (200) comprises:
a plurality of transmitter electrodes (210); and
a plurality of receiver electrodes (220),
wherein each intersection of one of the transmitter electrodes (210) and one of the receiver electrodes (220) forms one of the capacitive sensors (104), and
wherein each section (202) of the touch surface (101) is associated with one of a plurality of subsets of the transmitter electrodes (104), and one of a plurality of subsets of the receiver electrodes (220).

6. The device (100) according to claim 5, wherein the detection unit (105) is configured to:
select the subset of the transmitter electrodes (210) associated with the identified section (202) of the touch surface, and
successively drive each transmitter electrode of the selected subset of the transmitter electrodes (210) .

7. The device (100) according to claim 5 or 6, wherein the detection unit (105) is configured to:
select the subset of the receiver electrodes (220) associated with the identified section (202) of the touch surface, and
for each receiver electrode of the selected subset of the receiver electrodes, acquire a receiver signal using the receiver electrode.

8. The device (100) according to claim 1, wherein the touch surface (101) is divided into a plurality of sections (204), and wherein each section (204) of the touch surface (101) is associated with at least one of the piezoelectric sensors, and wherein the detection unit (105) is further configured to:
identify the section (202) of the touch surface (101) associated with the at least one emitting piezoelectric sensor (102),
scan at least two of the sections (202) of the touch surface in parallel,
identify a candidate touch location in each of the at least two sections of the touch surface, and
select the candidate touch location in the identified section of the touch surface.

9. The device (100) according to claim 8, wherein each section (202) of the touch surface (101) is associated with a different subset (204) of the capacitive sensors (102), and wherein the capacitive sensors (104) are grouped into groups of capacitive sensors (104), wherein each group of capacitive sensors (104) includes one capacitive sensor (104) of each subset (204) of the capacitive sensors (104), wherein the detection unit (105) is configured to:
for each group of capacitive sensors (104), measure a capacitive coupling of the group of capacitive sensors (104),
identify, based on the measured capacitive couplings, at least one candidate capacitive sensor in each of the subsets of capacitive sensors, and
select the candidate capacitive sensor in the subset of capacitive sensors associated with the at least one emitting piezoelectric sensor (102).

10. The device (100) according to claim 9, wherein the measured capacitive coupling is a self-capacitance, and wherein, for each group of capacitive sensors (104), all the capacitive sensors (104) of the group are connected to a same drive/measure line.

11. The device (100) according to claim 9, wherein the measured capacitive coupling is a mutual capacitance, wherein the capacitive sensor array (200) comprises:
a plurality of transmitter electrodes (210); and
a plurality of receiver electrodes (220),
wherein each intersection of one of the transmitter electrodes (210) and one of the receiver electrodes (220) forms one of the capacitive sensors (104), and
wherein each section (202) of the touch surface (101) is associated with one of a plurality of subsets of the transmitter electrodes (104), and one of a plurality of subsets of the receiver electrodes (220).

12. The device (100) according to claim 11, wherein the transmitter electrodes (104) are grouped into groups of transmitter electrodes (104), wherein each group of transmitter electrodes (104) includes one transmitter electrode (104) of each subset of the transmitter electrodes (104), wherein the detection unit (105) is configured to:
successively drive each group of transmitter electrodes (104), all the transmitter electrodes of the group of transmitter electrodes being driven simultaneously.

13. The device (100) according to claim 12, wherein the receiver electrodes (220) are grouped into groups of receiver electrodes, wherein each group of receiver electrodes includes one receiver electrode (220) of each subset of the receiver electrodes (104), wherein the detection unit (105) is configured to:
for each group of receiver electrodes, acquire a receiver signal using all the receiver electrodes of the group of receiver electrodes (220).

14. A method comprising:
receiving a piezoelectric sensor signal from at least one emitting piezoelectric sensor of a plurality of piezoelectric sensors (102),
scanning at least part of a touch surface (101) using a capacitive sensor array (200), and
identifying a touch location on the touch surface based on the scan and on the at least one emitting piezoelectric sensor (102).

15. The method according to claim 14, wherein the touch surface (101) is divided into a plurality of sections (204), and wherein each section (202) of the touch surface (101) is associated with at least one of the piezoelectric sensors (102), and wherein scanning at least part of a touch surface (101) using the capacitive sensor array (200) comprises:
identifying the section (202) of the touch surface (101) associated with the at least one emitting piezoelectric sensor (102), and
selectively scanning the section (202) of the touch surface associated with the at least one piezoelectric sensor (102).

16. The method according to claim 14, wherein each piezoelectric sensor is associated with a different section (204) of the touch surface (101), and
wherein scanning at least part of a touch surface (101) using a capacitive sensor array (200) comprises scanning at least two of the sections (202) of the touch surface in parallel,
wherein identifying the touch location on the touch surface based on the scan and on the at least one emitting piezoelectric sensor (102) comprises:
identifying the section (202) of the touch surface (101) associated with the at least one emitting piezoelectric sensor (102),
identifying a candidate touch location in each of the at least two sections of the touch surface, and
selecting the candidate touch location in the identified section of the touch surface.

17. A computer program product comprising program code configured to perform the method according to any of claims 14 to 16 when the computer program is executed on a computing device.
